## Europäisches Patentamt
## European Patent Office
## Office européen des brevets

(11) Numéro de publication: **0 016 685**

**A1**

(12) **DEMANDE DE BREVET EUROPEEN**

(21) Numéro de dépôt: **80400317.6**

(22) Date de dépôt: **11.03.80**

(51) Int. Cl.³: **A 01 K 9/00**
**G 01 F 11/28, B 01 F 15/04**
**G 05 D 11/03, B 65 G 65/46**

(30) Priorité: **14.03.79 FR 7906463**

(43) Date de publication de la demande:
**01.10.80 Bulletin 80/20**

(84) Etats Contractants Désignés:
**BE CH DE GB IT**

(71) Demandeur: **Legrain, Michel Aimé Joseph**

**Foulbec F-27210 Beuzeville(FR)**

(72) Inventeur: **Legrain, Michel Aimé Joseph**

**Foulbec F-27210 Beuzeville(FR)**

(74) Mandataire: **Bressand, Georges et al,**
**c/o CABINET LAVOIX 2 Place d'Estienne d'Orves**
**F-75441 Paris Cedex 09(FR)**

(54) Dispositif de distribution de liquide par doses déterminées pour machine d'alimentation, à volonté, de jeunes mammifères à la mamelle.

㊇ Ce dispositif comporte un siphon 8 qui relie un réservoir 1, alimenté par l'intermédiaire d'une vanne 2, à un récipient collecteur 14. Une tubulure 4 prolonge le réservoir vers le haut et porte une sonde 16 de contrôle de niveau située juste au-dessus du siphon 8. Une seconde sonde 22 est placée à la sortie du siphon. Les deux sondes sont reliées électriquement à la commande de la vanne de façon à provoquer sa fermeture lorsque le liquide atteint la sonde 16 de contrôle de niveau, et à interdire son ouverture tant que la sonde 22 reçoit du liquide issu du siphon. La quantité de liquide déversé à chaque ouverture de la vanne est ainsi toujours rigoureusement la même.

Application à la préparation de mélange de concentration précise et réglable, tel que le mélange de poudre de lait et d'eau.

./...

FIG.1

1

# Dispositif de distribution de liquide par doses déterminées pour machine d'alimentation, à volonté, de jeunes mammifères à la mamelle

La présente invention concerne un dispositif de distribution de liquide par doses déterminées, tout particulièrement adapté à la préparation de mélanges liquides ou pâteux ayant une concentration précise et destinés à l'alimentation des jeunes mammifères à la mamelle.

Ce dispositif comporte un réservoir relié par l'intermédiaire d'une vanne à source de liquide et prolongé vers le haut par une tubulure calibrée munie d'un moyen de contrôle du niveau du liquide qu'elle contient ; un siphon dont la petite branche plonge dans ce réservoir, tandis que sa grande branche plonge dans un récipient collecteur ; et des moyens de détection d'un écoulement de liquide à la sortie du siphon. Les moyens de détection de l'écoulement du liquide ainsi que les moyens de contrôle du niveau du liquide dans la tubulure sont connectés à la vanne d'alimentation du réservoir, de façon à ouvrir cette vanne lorsque, en l'absence d'écoulement dans le siphon, le niveau dans la tubulure est inférieur au niveau de réglage.

La dimension de la tubulure calibrée, ainsi que la position des moyens de contrôle du niveau à l'intérieur de cette tubulure, sont choisies de manière que le liquide atteigne ces moyens de contrôle au moment où s'effectue l'amorçage du siphon. Ainsi la quantité de liquide déversée par le siphon est connue de manière précise, la vanne ne pouvant alimenter le réservoir que lorsque l'écoulement dans le récipient collecteur est terminé.

Un tel dispositif est particulièrement bien adapté à la formation de mélanges dont la concentration doit être précise mais peut varier selon les utilisations. En conséquence l'invention s'étend à une machine d'alimentation des jeunes mammifères, qui comporte un tel dispositif et dans laquelle la vanne d'alimentation du réservoir est reliée également à un dispositif d'alimentation en poudre de lait, et ne s'ouvre que lorsque ce second dispositif d'alimentation a fourni au récipient collecteur la quantité désirée. Dans un tel cas le seul réglage du fonctionnement de ce second moteur assure une concentration précise du mélange.

La description ci-dessous d'un mode de réalisation donné à titre d'exemple non limitatif, et représenté aux dessins annexés, fera d'ailleurs ressortir les avantages et caractéristiques de l'invention.

Sur ces dessins :

- la Fig. 1 est une vue schématique d'une machine comportant un dispositif selon l'invention ;

- la Fig. 2 est un schéma électrique de la commande de la machine de la Fig. 1, le circuit étant sous tension.

- la Fig. 3 est une vue en coupe verticale d'une variante du dispositif d'alimentation en poudre de la machine de la figure 1 ;

- la Fig. 4 est une coupe suivant la ligne 2-2 de la Fig. 3 ;

- les Fig. 5 et 6 sont des vues analogues aux Fig. 3 et 4 montrant une variante de réalisation.

Le dispositif distributeur selon l'invention comporte un réservoir 1 de liquide à distribuer, qui est relié par une vanne 2 à une source, non représentée, qui peut par exemple être l'alimentation générale en eau. Ce réservoir 1 est prolongé par une tubulure calibrée 4, qui part de sa paroi supérieure et se dirige vers le haut. En outre la petite branche 6 d'un siphon 8 plonge légèrement dans le réservoir 1 dans lequel elle débouche par un orifice 10. La grande branche 12 de ce même siphon, dont le diamètre est inférieur à celui de la branche 6, plonge dans un récipient collecteur 14.

3

Un contrôleur de niveau, constitué dans le mode de réalisation représenté par une sonde 16, est monté dans la tubulure 4 et connecté électriquement, par exemple par l'intermédiaire d'un relais 18 et d'un interrupteur 20 à la commande 24 de la vanne 2 d'alimentation du réservoir 1, la tubulure 4 elle-même étant mise à la masse en 21. Le relais 18 et l'interrupteur 20 sont branchés de telle manière que lorsque l'eau, ou autre liquide, est présente dans la tubulure 4 et atteint la sonde 16, la vanne 2 est fermée.

Bien entendu, la position de la sonde de contrôle de niveau 16 est choisie de manière à permettre l'amorçage du siphon 8. En conséquence cette sonde 16 se trouve à un niveau supérieur à celui de la branche horizontale du siphon 8. De préférence la sonde 16 est placée le plus près possible du point d'amorçage, de sorte que la vanne 2 est fermée dès que cet amorçage s'est produit. Il est clair que dans ce cas la quantité de liquide qui est déversée par le siphon dans le récipient collecteur 14 correspond au volume délimité dans la tubulure 4 et le réservoir 1, entre la sonde 16 et l'orifice inférieur de la branche 6 du siphon 8, auquel s'ajoute celui du siphon lui-même. Ce volume peut facilement correspondre à une quantité bien déterminée de liquide. En outre il peut éventuellement être réglé par un déplacement de l'orifice 10 dans le réservoir, le débit de la vanne étant toujours supérieur à celui du siphon 8.

Le déversement du liquide dans le collecteur 14 est par ailleurs contrôlé au moyen d'un organe 22, sensible à l'écoulement du liquide, monté dans le récipient 14 en-dessous de l'orifice inférieur 13 de la branche 12 du siphon. De préférence, une borne 23 reliée à la terre est montée à proximité de cet orifice 13, sur la branche 12 du siphon, tandis que l'organe sensible à l'écoulement du liquide 22 est constitué par une plaque électriquement reliée, par l'interrupteur 20, au relais 18 de commande de l'interrup-

4

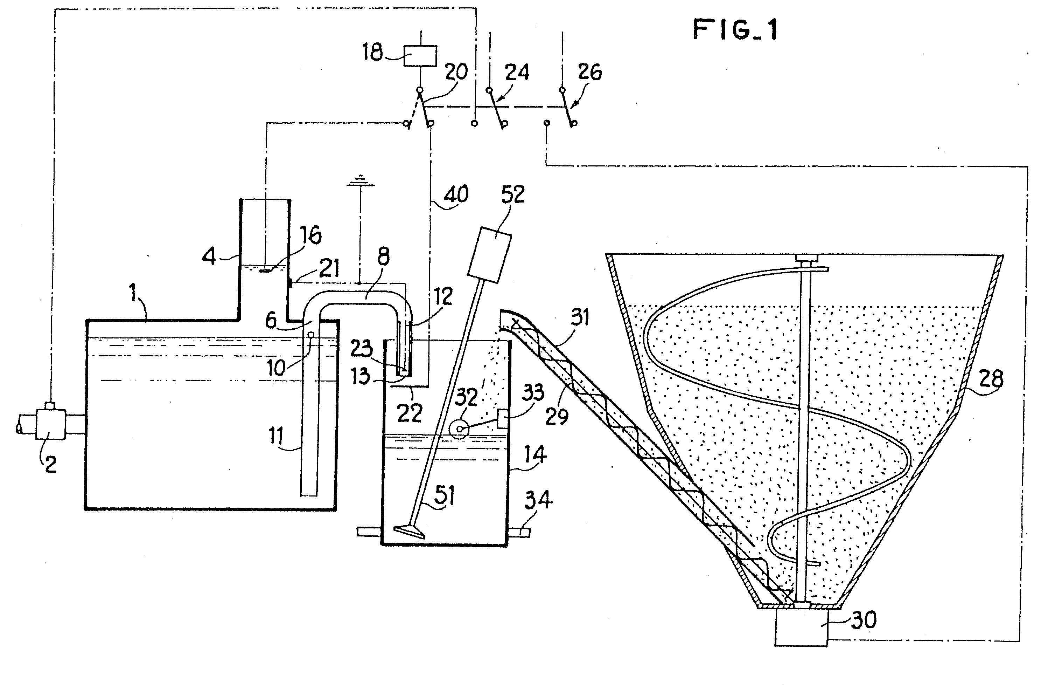

teur 24 de la vanne 2, ce relais maintenant la vanne fermée tant qu'il est excité. Lorsque le niveau du liquide dans le réservoir est à la hauteur de l'orifice 10, si l'interrupteur 20 est basculé jusqu'à la position en trait mixte sur la figure 1, le relais n'est plus excité et la vanne 2 est ouverte. Le réservoir se remplit. Dès que le liquide qui monte dans la tubulure 4 atteint la sonde 16, il provoque l'excitation du relais et le basculement de l'interrupteur 24 ainsi que celui de l'interrupteur 20, de sorte que l'excitation des relais et la fermeture de la vanne sont maintenues jusqu'à ce que le liquide cesse de s'écouler par le siphon. Dès que le liquide s'est totalement déversé dans le récipient collecteur 14, la vanne est à nouveau ouverte et le cycle recommence.

Les doses déversées à chaque fois dans le récipient collecteur 14 sont rigoureusement les mêmes, quels que soient la fréquence et le nombre de cycles utilisés.

Un tel dispositif est tout particulièrement adapté à la préparation de mélanges dans lesquels la concentration doit être précise et pouvoir être exactement répétée. La figure 1 du dessin annexé donne, sous une forme schématique, un exemple de réalisation d'une machine destinée à l'alimentation des jeunes mammifères, à la mamelle, et comportant d'une part de l'eau et, d'autre part, du lait en poudre ou analogue.

La poudre est placée dans un réservoir 28, ayant par exemple la forme d'une trémie, et elle est amenée au récipient collecteur 14 par l'intermédiaire d'un système d'alimentation approprié constitué par exemple par une vis d'Archimède 29 placée dans une goulotte 31 et débouchant à la partie supérieure du récipient collecteur 14. La vis d'Archimède 29 est entraînée par un moteur 30, de préférence un moteur électrique, associé à un moyen de réglage du nombre

5

de tours à effectuer par cycle. Ce moteur 30 est relié à la commande de la vanne 2. Ils sont de préférence branchés sur le même circuit électrique ou sur deux circuits associés, de manière par exemple à permettre de provoquer simultanément l'ouverture de la vanne 2 et le démarrage du moteur 30, mais à interdire une seconde ouverture de la vanne 2 tant que le cycle du moteur 30 n'est pas terminé.

Dans un mode de réalisation préféré, tel que celui représenté, le récipient collecteur 14 est muni d'un système de contrôle de niveau schématisé sur la figure 1 par un flotteur 32. Ce flotteur 32 est relié électriquement à la fois à la vanne 2 et au moteur 30 d'entraînement de la vis d'Archimède 29 et il provoque leur démarrage simultané lorsque le liquide contenu dans ce récipient descend au-dessous d'un niveau déterminé. La vanne 2 est fermée dès qu'une dose de liquide a été déversée dans le récipient 14, mais tant que la vis d'Archimède n'a pas terminé son cycle cette vanne 2 ne peut pas s'ouvrir à nouveau. Par contre dès que le moteur 30 arrête la vis 29 il libère la commande de la vanne 2 pour permettre son ouverture. Par suite, dès que le flotteur 32 signale une baisse du niveau du mélange, une nouvelle dose de liquide peut être déversée dans le collecteur.

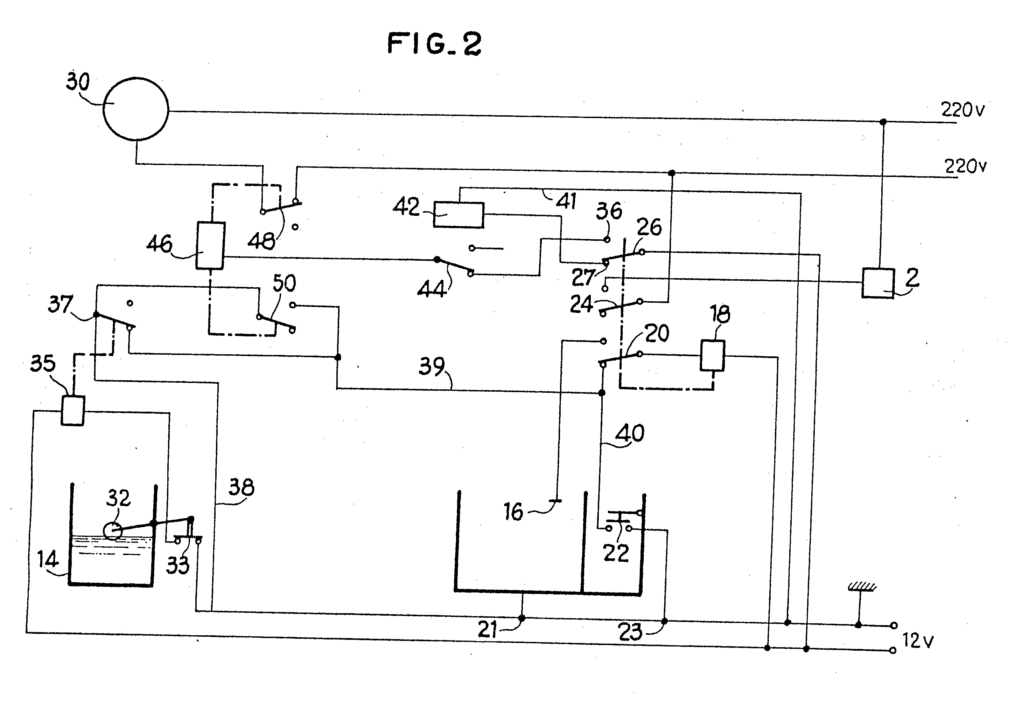

En effet, comme le montre schématiquement la figure 2, le flotteur 32 est, par exemple, électriquement relié à un contact électrique 33 qu'il ferme lorsque le mélange atteint le niveau de réglage, ce qui assure l'excitation d'un relais 35 qui commande un interrupteur 37 relié par des conducteurs 38 et 39 respectivement à la masse et au conducteur 40 connectant l'interrupteur 20 à la plaque 22. Lorsque le relais 35 est excité, l'interrupteur 37 est fermé et relié au relais 18 par l'interrupteur 20. Ce relais 18 est excité et maintient les interrupteurs 24 et 26 de commande, respectivement de l'ouverture de la vanne 2 et du démarrage du mo-

6

teur 30, dans la position de repos représentée.

Dès que le niveau du liquide baisse dans le récipient 14, le relais 35 cesse d'être excité et laisse l'interrupteur 37 s'ouvrir. Le relais 18 n'est pas excité. Les interrupteurs 20, 24 et 26 basculent. Le relais 18 est relié à la sonde 16. La vanne 2 est alimentée. L'interrupteur 26 quitte le contact 27 relié par un conducteur 41 à un relais temporisé 42, ayant un retard à la désexcitation, de commande d'un interrupteur 44 intercalé entre le second contact 36 de l'interrupteur 26 et un relais régulateur 46 qui commande un interrupteur 48 de fermeture de l'alimentation du moteur 30. Le relais 42 provoque l'ouverture de l'interrupteur 44 avec un léger retard par rapport au basculement de l'interrupteur 26, tandis que le relais 46 maintient l'interrupteur 48 en position de fermeture pendant la durée nécessaire au déversement de la quantité de poudre désirée.

Le relais 46 ferme également un interrupteur 50 monté en parallèle avec l'interrupteur 37 entre les conducteurs 38 et 39.

Lorsque le liquide arrivant par la vanne 2 atteint la sonde 16, le circuit d'excitation du relais 18 est fermé entre cette sonde et la borne 21. L'interrupteur 20 bascule vers le conducteur 40, la plaque 22 et la borne 23, et maintient le relais 18 excité tant que du liquide sort du siphon pour tomber dans le collecteur.

L'interrupteur 24 a basculé. La vanne est fermée. L'interrupteur 26 a également basculé mais la commande 46 poursuit son cycle jusqu'à la fin. L'interrupteur 50 est maintenu fermé. Par suite, même si le niveau du liquide dans le collecteur est inférieur à celui du contact ou sonde 33, la vanne 2 ne s'ouvre pas. Le relais 18 reste excité tant que fonctionne la commande 46. Dès que la commande 46 s'arrête, les interrupteurs 48 et 50 s'ouvrent et le cycle peut recommencer dès que le contact ou la sonde 33 le déclenchera.

7

La vitesse de rotation de la vis d'Archimède 29, ainsi que le nombre de tours nécessaires à celle-ci pour déverser la quantité de poudre désirée, peuvent facilement être réglés en fonction de la nature même de cette poudre ou de la qualité du mélange à obtenir.

Grâce au dispositif de l'invention, quel que soit le type de cycle choisi pour la vis d'Archimède, le récipient collecteur 14 reçoit toujours exactement la dose de liquide désirée pour correspondre à la dose de poudre introduite au cours d'un cycle de la vis d'Archimède 29. En outre, la concentration du mélange peut facilement être modifiée par un réglage du nombre de tours, c'est-à-dire de la durée de fonctionnement de la vis d'Archimède, ce qui est un type de réglage simple et précis.

Par suite, une machine munie d'un dispositif de distribution de liquide selon l'invention est facilement adaptable à des types extrêmement divers de produits et notamment à des poudres plus ou moins grasses, utilisées successivement ou en alternance avec des concentrations qui peuvent être modifiées facilement. Il est donc possible avec la machine ainsi réalisée de préparer à partir de poudres plus ou moins grasses et d'eau, du lait destiné à l'alimentation à volonté des jeunes animaux tels que les veaux. Le récipient collecteur 14 est alors muni, par exemple, d'ajutages 34 permettant la pose de tuyaux de prélèvement direct et en continu, terminés par exemple par des tétines.

Bien entendu, une telle machine peut également comporter d'autres dispositifs d'alimentation réglables en produits liquides, pâteux, pulvérulents ou autres, connectés de manière analogue à la commande de la vanne 2 pour permettre, par exemple, d'introduire dans le récipient 14 une matière grasse en même temps que la poudre de lait et l'eau.

De même, un agitateur 51 monté dans le récipient 14 peut être commandé par un moteur électrique 52 branché sur

8

le circuit de commande de la vanne 2 et des dispositifs d'alimentation des différents composants du mélange.

De préférence, lorsque le liquide doit être chauffé, la branche 6 du siphon est prolongée, jusqu'à proximité du fond du réservoir, par un tube 11 dont l'orifice inférieur est plus grand que l'orifice 6, ce qui permet de prélever le liquide chaud du fond du réservoir.

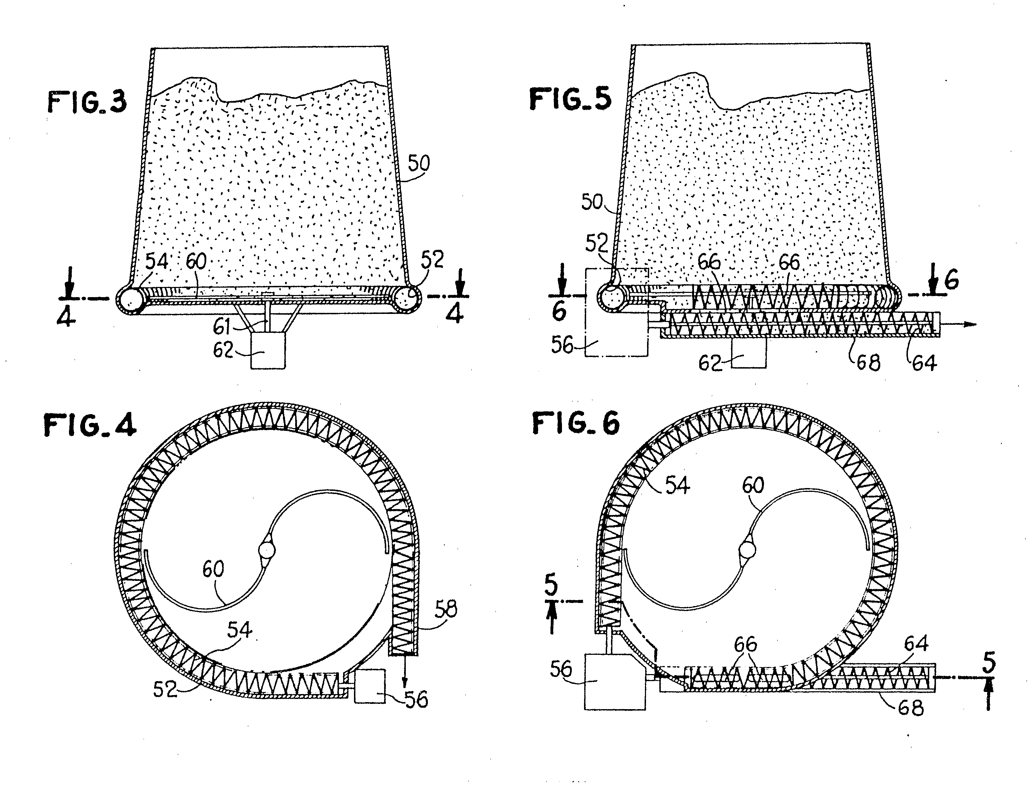

Dans le cas où la poudre de lait est relativement grasse, il est souvent préférable de donner la trémie de réserve de poudre et à la vis d'entraînement et de dosage la forme représentée sur les figures 3 à 6.

La trémie 50 a alors une forme tronconique évasée vers le bas et forme à sa partie inférieure une gorge annulaire interne périphérique 52 dans laquelle est logée une vis d'entraînement souple 54. Cette vis 54 est constituée par exemple par un fil enroulé en hélice et relié à une de ses extrémités à l'arbre d'un moteur 56 qui l'entraîne en rotation autour de l'axe de l'hélice.

A son extrémité opposée au moteur 56, la gorge 52 est prolongée par une goulotte de déversement 58. Un racleur 60 dont la forme est définie par deux pales semi-circulaires portées par un arbre vertical 61 est monté dans le fond de la trémie 50 au droit de la gorge 52 et est entraîné en rotation autour de l'arbre 61 par un moteur 62. La rotation du racleur 60 repousse la poudre vers la vis 54 tandis que le mouvement de celle-ci entraîne cette poudre vers la goulotte 58 et le récipient collecteur 14 avec un débit déterminé par la vitesse du moteur. Bien entendu le démarrage et la durée de fonctionnement de ces moteurs 56 et 62 sont commandés de la même manière que ceux du moteur 30 de la figure 1.

Selon une autre variante, la goulotte de déversement de la poudre 68 est disposée en dessous de la gorge 52 de la trémie 50, tangentiellement à cette gorge, et contient une vis d'Archimède 64 entraînée par un moteur, qui peut être le

9

moteur 56 de commande de la vis 54. Le fond de la gorge 52 comporte des ouvertures 66 de communication avec la goulotte 64, par lesquels la poudre tombe dans cette goulotte afin d'être entraînée vers le récipient collecteur 14. La poudre est ainsi distribuée par doses régulières, connues mais réglables en fonction de la concentration désirée et quelle que soit sa teneur en matières grasses.

Diverses autres modifications pourraient d'ailleurs être apportées au dispositif décrit, sans sortir du cadre de l'invention. Par exemple, l'organe 22 sensible à l'écoulement du liquide dans le siphon et la borne 23 montés à proximité de l'orifice 13 pourraient être remplacés par une sonde et une borne montés à la jonction de la branche 6 et de la branche horizontale du siphon 8 de façon à interdire l'ouverture de la vanne 2 tant que du liquide pénètre dans cette branche horizontale.

## 0016685

10

R E V E N D I C A T I O N S

1 - Dispositif pour la distribution d'un liquide par doses déterminées en vue de son mélange, dans un récipient collecteur avec au moins un autre composant pulvérulent, tel que de la poudre de lait, pour l'alimentation de jeunes mammifères, à la mamelle, caractérisé en ce qu'il comporte un réservoir 1 relié par l'intermédiaire d'une vanne 2 à une source de liquide et prolongé vers le haut par une tubulure calibrée 4, munie de moyens 16, 21 de contrôle du niveau du liquide qu'elle contient ; un siphon 8 dont la petite branche 6 plonge dans le réservoir tandis que sa grande branche 12 plonge dans un récipient collecteur 14 et des moyens 22 de détection de l'écoulement du liquide par le siphon, montés dans le récipient collecteur et connectés, en même temps que les moyens de contrôle du niveau du liquide dans la tubulure, à la vanne 2 d'alimentation du réservoir pour ouvrir automatiquement cette vanne lorsque, en l'absence d'écoulement par le siphon, le liquide dans la tubulure descend à un niveau inférieur au niveau de réglage.

2 - Dispositif suivant la revendication 1, caractérisé en ce que les moyens de contrôle du niveau du liquide dans la tubulure sont constitués par une sonde 16 reliée à un circuit électrique de commande de la vanne 2, la tubulure 4 elle-même étant reliée à la masse.

3 - Dispositif suivant l'une des revendications 1 et 2, caractérisé en ce que les moyens de détection de l'écoulement dans le siphon sont constitués par une borne 22 disposée horizontalement sous l'orifice 13 de sortie de ce siphon, dans le récipient collecteur 14, cette borne étant reliée au circuit électrique de commande de la vanne 2 tandis que l'extrémité du siphon est reliée à la terre.

4 - Dispositif suivant l'une des revendications 2 et 3, caractérisé en ce que la sonde 16 de contrôle du niveau dans la tubulure 4 est placée à une hauteur supérieure à celle de la branche horizontale du siphon 8.

5 - Dispositif suivant l'une des revendications 1 à 4, caractérisé en ce que la petite branche 6 du siphon est prolongée en 11 jusqu'au fond du réservoir et se termine par un second orifice de communication avec ce réservoir.

6 - Dispositif suivant l'une des revendications 1 à 5, caractérisé en ce que la grande branche 12 du siphon a un diamètre plus petit que le reste du siphon.

7 - Machine de préparation d'un mélange de poudre et de liquide ayant toujours des proportions précises et destiné à l'alimentation des jeunes mammifères, à la mamelle, qui permet le prélèvement à volonté et comporte au moins un dispositif de distribution de doses déterminées de liquide selon l'une des revendications 1 à 6, un récipient collecteur muni d'un agitateur et une réserve de poudre, caractériséeen ce qu'elle comporte en outre un dispositif de dosage de la poudre 28, 29, dont la commande est également reliée électriquement à la vanne 2 du réservoir d'eau par un dispositif d'interdiction du passage de cette vanne de la position fermée à la position ouverte pendant le fonctionnement du doseur de poudre.

8 - Machine suivant la revendication 7, caractérisée en ce que le doseur de poudre est constitué par une vis d'Archimède 29, 54 entraînée par un dispositif moteur 30, 56, lui imprimant un nombre de tours déterminés, réglable.

9 - Machine suivant l'une des revendications 7 et 8, caractérisée en ce qu'elle comporte au moins un autre dispositif de dosage d'un produit pâteux, pulvérulent ou fluide, gras ou sec.

10 - Machine suivant la revendication 8, caractérisée en ce que le doseur de poudre comporte une vis souple 54, montée dans une gorge annulaire périphérique interne 52

12

du fond d'une réserve évasée vers le bas 50 et une goulotte de sortie 58, 68 tangentiel à la gorge.

11 - Machine suivant la revendication 10, caractérisée en ce que la goulotte 68 est placée en dessous de la vis 54 et contient une vis d'Archimède 64, des trous 66 de communication étant percés dans le fond de la gorge.

12 - Machine suivant la revendication 10, caractérisée en ce que un racleur 60 comportant deux pales semi-circulaires, est monté rotatif à l'intérieur de la vis annulaire 54.

FIG_1

FIG. 2

FIG.5

FIG.6

FIG.3

FIG.4

0016685

**Office européen des brevets**

**RAPPORT DE RECHERCHE EUROPEENNE**

Numéro de la demande

EP 80 40 0317

| Catégorie | Citation du document avec indication, en cas de besoin, des parties pertinentes | Revendication concernée |
|---|---|---|
| | **DOCUMENTS CONSIDERES COMME PERTINENTS** | |
| | FR - A - 2 045 192 (E. PATUREL) <br> * Titre; page 3, ligne 12 - page 6, ligne 5; figures 1,2 * <br> -- | 1,7,8 |
| | FR - A - 2 398 341 (J. KHOURY HE-LOU) <br> * Page 1, lignes 1-5; page 3, ligne 8 - page 6, ligne 12; figure * <br> -- | 1,4,5 |
| | US - A - 3 653 640 (H.A.L. DE HAAS) <br> * Colonne 2, ligne 60 - colonne 3, ligne 29; colonne 4, lignes 39-59; figure * <br> -- | 1,2,4 |
| | FR - A - 1 480 782 (PATENTAUSWER-TUNG VOGELBUSCH GmbH) <br> * Titre; page 2, colonne de droite, ligne 42 - page 3, colonne de droite, ligne 3; page 3, colonne de droite, ligne 44 - page 4, colonne de gauche, ligne 10; figure * <br> -- | 2,7,8 |
| | FR - A - 2 018 658 (R. CARTER et al.) <br> * Titre; page 2, lignes 3-23; figure 1 * <br> -- | 2,6 |
| | FR - A - 1 452 914 (S.A.B.E. SPE-CIALITES ALIMENTAIRES POUR LE BE-TAIL) <br> ./. | 7-9 |

**CLASSEMENT DE LA DEMANDE (Int. Cl. 3)**

A 01 K 9/00
G 01 F 11/28
B 01 F 15/04
G 05 D 11/03
B 65 G 65/46

**DOMAINES TECHNIQUES RECHERCHES (Int. Cl. 3)**

A 01 K 9/00
5/02
G 01 F 11/28
G 05 D 11/00
11/03
B 01 F 15/04
A 21 C 1/14
1/00
B 65 G 65/46
33/16

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

X Le présent rapport de recherche a été établi pour toutes les revendications

| Lieu de la recherche | Date d'achèvement de la recherche | Examinateur |
|---|---|---|
| La Haye | 20-06-1980 | POINT |

OEB Form 1503.1 06.78

**Office européen
des brevets**

**RAPPORT DE RECHERCHE EUROPEENNE**

| Catégorie | Citation du document avec indication, en cas de besoin, des parties pertinentes | Revendication concernée |
|---|---|---|
| | * Page 1, colonne de gauche, ligne 23 - page 2, colonne de gauche, ligne 9; figure * | |
| | -- | |
| | FR - E - 86 370 (M.A.J. LEGRAIN et al.) | 7,8, 11,12 |
| | * Titre; page 1, colonne de droite, ligne 22 - page 2, colonne de gauche, ligne 17; figures 1,2 * | |
| | -- | |
| | US - A - 2 763 362 (J. GREAVES) | 8,10 |
| | * Colonne 1, lignes 15-23, 42-44; 51-57; figure 1 * | |
| | -- | |
| | DE - A - 2 546 515 (E. WEBER) | 10-12 |
| | * Page 10, ligne 17 - page 11, ligne 13; figures 1,2 * | |
| | -- | |
| | US - A - 3 851 774 (J.J. LAIDIG et al.) | 11 |
| | * Colonne 3, lignes 8-36; figure 1 * | |
| | ---- | |

**DOCUMENTS CONSIDERES COMME PERTINENTS**

CLASSEMENT DE LA DEMANDE (Int. Cl. 3)

DOMAINES TECHNIQUES RECHERCHES (Int. Cl. 3)

OEB Form 1503.2 06.78